# EUROPEAN PATENT SPECIFICATION

(11) **EP 3 470 379 B1**
(45) Date of publication and mention of the grant of the patent: **17.01.2024**
(21) Application number: 18382721.1
(22) Date of filing: 11.10.2018
(51) Int. Cl.: C02F 1/50, C02F 1/68, C02F 103/42, C02F 1/52, C02F 101/10

(54) **WATER-SOLUBLE CAPSULE CONTAINING A SOLUTION WITH A TREATMENT AGENT FOR TREATING SWIMMING POOL WATERS**
WASSERLÖSLICHER KAPSEL ENTHALTEND EINE LÖSUNG MIT EINEM BEHANDLUNGSMITTEL ZUR BEHANDLUNG VON SCHWIMMBADENWÄSSERN
CAPSULE HYDROSOLUBLE CONTENANT UNE SOLUTION ET UN AGENT DE TRAITEMENT DESTINÉ À TRAITER DES EAUX DE PISCINE

(30) Priority: 13.10.2017 ES 201731205
(43) Date of publication of application: 17.04.2019
(73) Proprietor: Inquide, S.A. (Sociedad Unipersonal), 08213 Polinya (Barcelona) (ES)
(72) Inventor: JUNYENT LLADÓ, Jordi, 08213 POLINYA (BARCELONA) (ES)
(74) Representative: Herrero & Asociados, S.L.

(56) References cited:
- WO-A1-2014/071240
- US-A1- 2003 156 981
- US-A1- 2004 002 433
- US-A1- 2004 186 035
- US-A1- 2004 192 569
- US-A1- 2006 189 772
- US-A1- 2007 034 575
- US-A1- 2016 304 367
- HIROSHI YAMAMOTO ET AL: "Aquatic toxicity and ecological risk assessment of seven parabens: Individual and additive approach", SCIENCE OF THE TOTAL ENVIRONMENT, ELSEVIER, AMSTERDAM, NL, vol. 410, no. 411, 16 September 2011 (2011-09-16), pages 102-111, XP028104503, ISSN: 0048-9697, DOI: 10.1016/J.SCITOTENV.2011.09.040 [retrieved on 2011-09-21]

## Description

The present invention relates to a water-soluble capsule containing a solution with a water treatment agent for treating swimming pools that allows the solution to be manipulated in a safe way and facilitates the use of the exact dose of the agent.

### Background of the invention

The use of different compositions for treating water and for preventing the development of algae and microorganisms in the water of swimming pools and spas is common.

These compositions can be dosed in tablets and granules such as those defined in the patent under the publication number US2003/0156981. Said application describes a compact product that comprises water-soluble algaecide products and which are dispersed within a tablet. In said application it is relevant that the algaecide is in a solid form since it is intended to be retained in the filter for eliminating the phosphates in the pool water that circulates through the filter.

In the document with publication number WO2009042752, methods for controlling the pH of the water and for controlling the algae population by means of a synergistic composition of a lanthanide compound and a transition metal salt are described. These salts are preferably used in solid form, and more preferably applied in the form of a preloaded sealed cartridge. In the state of the art the problems of adding algaecide in liquid form are explained.

Lastly, application WO2014071240 describes a water treatment composition that comprises, among other elements, a phosphate removing substance that is included in a sealed pouch made up of a water-soluble film. The pouch is directly applied to the water and dissolves to release the compounds for treating the water. The composition included in the water-soluble pouches contains a free-flowing granular solid composite and to which the phosphate removing substance and a polymer flocculant are bound. Then, in this application, the composition is formed by solid granules packaged in the water-soluble film pouch. This application does not describe a liquid composition contained in a water-soluble film.

Therefore, the object of the present invention is to develop a solution with an active agent for treating swimming pool water, contained in a water-soluble capsule.

### Description of the invention

The water-soluble capsule of the invention containing a solution with the water treatment agent respects the environment, since the products are highly concentrated. This allows for the use of a smaller amount of raw materials, packaging and energy in the production thereof. From an ecological perspective, the idea of being able to reduce the volume of containers and packaging is highly relevant, due to the detrimental impact these waste products have on the environment because of the large volume of the same. With the capsule of the present invention, with the water treatment agent being concentrated, the load weight, as well as the space for storage and transportation of the same is reduced by up to 85%.

With the capsule of the invention, a control of the used product is carried out and a reduction in the cost of waste management is achieved.

Furthermore the active ingredient is inside the capsule, allowing for a safe manipulation of the same, and contact with the chemical product is not necessary. Its use is easy and comfortable.

When the capsule of the invention is added to water, for example the water of a swimming pool, the water-soluble capsules dissolve, facilitating the dispersion and dissolution of the liquid solution contained in the same. The present invention, by having the active ingredient in the form of a solution, facilitates the dispersion and dissolution of the water treatment agent in the water once it is released from the capsule.

Thus, the first aspect of the invention relates to a water-soluble capsule that consists of an outer film that contains a solution with at least a water treatment agent, wherein:
- the outer film comprises PVOH (polyvinyl alcohol) and
- the solution with a water treatment agent comprises a mixture of chitosan as flocculating agent and lanthanum chloride as phosphate reducer and a dissolving medium for the agent, the dissolving medium being a mixture of polyethylene glycol and glycerol.

A second aspect of the invention is a method of obtaining the water-soluble capsule of the invention that comprises the steps of:
a) mixing the polyethylene glycol and glycerol mixture with the chitosan and lanthanum chloride mixture in a mixer with constant stirring until they are homogenized, and a controlled temperature, comprised between 20°C and 25°C;
b) filling the outer film comprising PVOH with the mixture from step a) at a relative humidity comprised between 35% and 45% and at a controlled temperature comprised, between 20°C and 25°C.
c) closing the film by heat sealing.

The third aspect of the invention is the use of the capsule of the first aspect of the invention for water treatment.

The capsule is preferably used in swimming pools and spas. It is particularly used in the water of swimming pools.

### Description of a preferred embodiment

As was previously stated, the first aspect of the invention relates to a water-soluble capsule that consists of an outer film containing a solution with a water treatment agent, wherein the outer film comprises PVOH and the solution with the water treatment agent comprises a mixture of chitosan as flocculating agent and lanthanum chloride as a phosphate reducer and a dissolving medium for the agent, the dissolving medium being a mixture of polyethylene glycol and glycerol.

Through the present invention, a solution with a water treatment agent that is compatible with a water-soluble capsule has been achieved, since the outer film is neither broken down nor dissolved, and the most relevant aspect is that a solvent has been achieved that dissolves the water treatment agent but not said film.

The solvent is a mixture of a mixture of polyethylene glycol and glycerol,. The flocculating agent is chitosan.

The phosphate reducer is lanthanum chloride.

The solution preferably comprises a perfume and/or a colorant and/or a sequestrant and/or a pH regulator an/or enzymes.

The sequestrant is preferably selected from among: HEDP, PBTC, citric acid, NTA, EDTA.

The pH regulator is preferably selected from among lactic acid, citric acid and acetic acid.

According to the invention, the water treatment agent is a mixture of lanthanum chloride and chitosan and the solvent is a mixture of polyethylene glycol and glycerol. Preferably, the solution within the water soluble capsule comprises: glycerol in a percentage by weight with respect to the weight of the total solution between 10% and 20%, PEG 400 in a percentage by weight with respect to the weight of the total solution between 40% and 60%, lanthanum chloride in a percentage by weight with respect to the weight of the total solution between 10% and 20%, chitosan in a percentage by weight with respect to the weight of the total solution between 1% and 5%, lactic acid in a percentage by weight with respect to the weight of the total solution between 10% and 20% and acetic acid in a percentage by weight with respect to the weight of the total solution between 1% and 5%.

### Examples

### Example 1. Example of the composition of the outer film of the water-soluble capsule

The outer film is made up of the following elements, given in percentage by weight with respect to the total weight of the film: a polymer of polyvinyl alcohol (73%), plasticizer (19%), surfactant (0.2%), side release agents (0.3%) and water 7.5%.

### Example 2. Composition of a solution with the water treatment agent inside the film of Example 1 (not part of the invention).

PEG 400 (60%), glycerol (23.74%), chitosan (1.2%), lactic acid (15%), perfume (0.06%), colorant (0.001%).

### Example 3. Composition of a solution with the water treatment agent inside the film of Example 1 (not part of the invention).

PEG400 (49.94%), lanthanum chloride (27.5%), monoethylene glycol (22.5%), perfume (0.06%), colorant (0.001%).

### Example 4. Composition of a solution with the water treatment agent inside the film of Example 1.

Glycerol (17%), PEG 400 (49%), lanthanum chloride (16%), chitosan (1.2%), lactic acid (15%), acetic acid (1.8%), perfume (0.06%), colorant (0.001%).

### Example 5. Composition of a solution with the water treatment agent inside the film of Example 1 (not part of the invention).

Monoethylene glycol (25%), glycerol (20%), PPG (12.94%), a polymer of quaternary ammonium (42%), perfume (0.06%), colorant (0.0009%).

### Example 6. Composition of a solution with the water treatment agent inside the film of Example 1 (not part of the invention).

PEG400 (68.654%), benzalkonium chloride (31.26%), defoamer (0.025%), perfume (0.06%) and colorant (0.0009%).

## Claims

1. A water-soluble capsule **characterized in that** it consists of an outer film that contains a solution with at least a water treatment agent, wherein the outer film comprises polyvinyl alcohol (PVOH) and the solution with the water treatment agent comprises is a mixture of lanthanum chloride and chitosan and a dissolving medium for the agent, the dissolving medium being a mixture of polyethylene glycol and glycerol.

2. The water-soluble capsule of claim 1, **characterized in that** the outer film comprises at least a component selected from among: a plasticizer, a surfactant, a side release agent.

3. A method for obtaining the water-soluble capsule according to claims 1 to 2 that comprises the steps of:
a) mixing the polyethylene glycol and glycerol mixture and the lanthanum chloride and chitosan mixture in a mixer with constant stirring until they are homogenized and a controlled temperature comprised between 20°C and 25°C;
b) filling the outer film comprising polyvinyl alcohol (PVOH) with the mixture from step a) at a relative humidity comprised between 35% and 45% and at a controlled temperature comprised between 20°C and 25°C.
c) closing the film by heat sealing.

4. A use of the water-soluble capsule according to claims 1 to 2 for treating water.

5. The use according to claim 4, **characterized in that** the water is water from swimming pools or spas.

## Patentansprüche

1. Wasserlösliche Kapsel, **dadurch gekennzeichnet, dass** sie aus einer äußeren Folie besteht, die eine Lösung mit mindestens einem Wasserbehandlungsmittel enthält, wobei die äußere Folie Polyvinylalkohol (PVOH) umfasst und die Lösung mit dem Wasserbehandlungsmittel ein Gemisch aus Lanthanchlorid und Chitosan und ein Auflösungsmedium für das Mittel umfasst, wobei das Auflösungsmedium ein Gemisch aus Polyethylenglykol und Glycerin ist.

2. Wasserlösliche Kapsel nach Anspruch 1, **dadurch gekennzeichnet, dass** die äußere Folie mindestens eine Komponente umfasst, die ausgewählt ist aus: einem Weichmacher, einem Tensid, einem Seitentrennmittel.

3. Verfahren zum Herstellen der wasserlöslichen Kapsel nach einem der Ansprüche 1 bis 2, das die folgenden Schritte umfasst:
a) Mischen des Gemischs aus Polyethylenglykol und Glycerin und des Gemischs aus Lanthanchlorid und Chitosan in einem Mischer unter ständigem Rühren, bis sie homogenisiert sind und eine kontrollierte Temperatur zwischen 20°C und 25°C herrscht;
b) Füllen der äußeren Folie, die Polyvinylalkohol (PVOH) enthält, mit dem Gemisch aus Schritt a) bei einer relativen Feuchtigkeit zwischen 35 % und 45 % und bei einer kontrollierten Temperatur zwischen 20 °C und 25 °C und
c) Verschließen der Folie durch Heißversiegeln.

4. Verwendung der wasserlöslichen Kapsel nach einem der Ansprüche 1 bis 2 zur Behandlung von Wasser.

5. Verwendung nach Anspruch 4, **dadurch gekennzeichnet, dass** es sich bei dem Wasser um Wasser aus Schwimmbädern oder Spas handelt.

## Revendications

1. Capsule soluble dans l'eau **caractérisée en ce qu'**elle est constituée d'une pellicule externe qui contient une solution avec au moins un agent de traitement de l'eau, dans laquelle la pellicule externe comprend de l'alcool polyvinylique (PVOH) et la solution avec l'agent de traitement de l'eau comprend un mélange de chlorure de lanthane et de chitosan et un milieu de dissolution pour l'agent, le milieu de dissolution étant un mélange de polyéthylène glycol et de glycérol.

2. Capsule soluble dans l'eau selon la revendication 1, **caractérisée en ce que** la pellicule externe comprend au moins un composant sélectionné parmi : un plastifiant, un tensioactif, un agent de libération latérale.

3. Procédé destiné à obtenir la capsule soluble dans l'eau selon les revendications 1 à 2 qui comprend les étapes consistant à :
a) mélanger le mélange de polyéthylène glycol et de glycérol et le mélange de chlorure de lanthane et de chitosan dans un mélangeur sous agitation constante jusqu'à ce qu'ils soient homogénéisés et qu'ils aient une température régulée comprise entre 20 °C et 25 °C ;
b) remplir la pellicule externe comprenant de l'alcool polyvinylique (PVOH) avec le mélange de l'étape a) à une humidité relative comprise entre 35 % et 45 % et à une température régulée comprise entre 20 °C et 25 °C ;
c) fermer la pellicule par thermoscellage.

4. Utilisation de la capsule soluble dans l'eau selon les revendications 1 à 2 destinée au traitement de l'eau.

5. Utilisation selon la revendication 4, **caractérisée en ce que** l'eau est de l'eau provenant de piscines ou de stations thermales.
